# EUROPÄISCHE PATENTSCHRIFT

(11) **EP 2 288 094 B1**
(45) Veröffentlichungstag und Bekanntmachung des Hinweises auf die Patenterteilung: **12.08.2020**
(21) Anmeldenummer: 10161419.6
(22) Anmeldetag: 29.04.2010
(51) Int. Cl.: H04L 12/58

(54) **Verfahren zur Übermittlung einer Nachricht**
Method for transmitting a message
Procédé de transmission d'une information

(30) Priorität: 14.08.2009 DE 102009037296
(43) Veröffentlichungstag der Anmeldung: 23.02.2011
(73) Patentinhaber: Deutsche Post AG, 53113 Bonn (DE)
(72) Erfinder: Ulrich, Keith, 53227, Bonn-Oberkassel (DE)
(74) Vertreter: dompatent von Kreisler Selting Werner - Partnerschaft von Patent- und Rechtsanwälten mbB

(56) Entgegenhaltungen:
- WO-A1-00/22860
- WO-A1-01/84867
- US-A- 5 444 444
- US-A1- 2005 283 308

## Beschreibung

Die Erfindung betrifft ein Verfahren zur Übermittlung einer Nachricht an einen von mehreren Nutzern, wobei die Nachricht von einer zentralen Nachrichtenverwaltungseinheit an ein elektronisches Gerät eines jeweiligen Nutzers übermittelt wird.

Insbesondere betrifft die Erfindung die Übermittlung einer Nachricht innerhalb eines Logistiksystems, in dem Post- und/oder Warensendungen transportiert und zugestellt werden. Neben der Zustellung von Post- und/oder Warensendungen durch einen Zusteller bei einem Empfänger ist es oftmals erforderlich bzw. gewünscht, dass Post- und/oder Warensendungen auch bei einem Kunden abgeholt und zu einem Empfänger transportiert werden. Um die Abholung einer Sendung zu veranlassen, muss üblicherweise ein Zustelldienst kontaktiert und die Abholung angefordert werden. Dieser Kontakt kann telefonisch oder beispielsweise auch über das Internet erfolgen. Dem Kunden wird dann eine Zeit mitgeteilt, zu der die Sendung voraussichtlich abgeholt wird und für die Abholung müssen Versandunterlagen vorbereitet, bereitgehalten und übergeben werden. Ist es dem Zustelldienst nicht möglich, eine genaue Zeitangabe für die Abholung anzugeben, muss oftmals längere Zeit auf den Abholer gewartet werden.

Zur Abholung von Postsendungen ist es ferner bekannt, am Briefkasten eines Kunden eine Anzeige vorzusehen, welche einem Zusteller signalisiert, dass sich in dem Briefkasten eine Sendung zur Abholung befindet. Die Anzeige kann beispielsweise durch eine rote Klappe gebildet werden, die hochgeklappt wird, wenn eine Sendung zur Abholung bereitgestellt wurde. Dies bedeutet jedoch, dass neben dem Zusteller auch unbefugte Dritte die Sendung aus dem Briefkasten entnehmen könnten. Eine weitere bekannte Lösung sieht daher vor, dass der Zusteller über einen Schlüssel oder einen Zugangscode verfügt, mit dem er den Briefkasten wenigstens einmalig öffnen kann. Damit der Zusteller weiß, welche Adressen er anzufahren hat und welche Briefkästen er öffnen muss, muss er dazu jedoch auch hier zuvor eine entsprechende Nachricht von dem Kunden erhalten haben.

Möglich ist es jedoch auch, den Versender einer Sendung zu informieren, wenn ein Zusteller im Bereich der Adresse des Versenders unterwegs ist, um es so dem Versender zu ermöglichen, zeitnah eine Sendung für die Abholung vorzubereiten und gegebenenfalls selbst zu übergeben.

WO 01/84867 A1 beschreibt ein Mobilfunksystem mit einem Alarmservice, der mehrere Nutzer eines Positionsbestimmungsservice in die Lage versetzt, jeweils eine Textnachricht auf ihrem Handy zu erhalten, sobald sie sich in der Nähe zueinander befinden. Ein solcher Nutzer übermittelt dem Anbieter des Alarmservices dazu eine Liste von Personen, deren Nähe er signalisiert bekommen möchte. Die Mobilfunkgeräte sind dazu mit Positionsbestimmungsmitteln ausgerüstet. Die Position und Entfernung wird dabei von einem zentralen System gemessen und verarbeitet.

WO 00/22860 A1 beschreibt ein Verfahren und System zur Übertragung von Daten zwischen Kommunikationseinheiten, insbesondere zur Verwendung in mobilen Kommunikationsnetzwerken. Hierbei erhält ein Nutzer A eine automatische Benachrichtigung vom System, wenn sich ein vorausgewählter Nutzer B ein vorbestimmtes Gebiet betritt.Die Benachrichtigung kann dabei zusätzlich von einem erfolgreichen Datenabgleich mit nutzerspezifischen Parametern abhängen. Die Position der Nutzer A und B wird dabei über die Position deren drahtloser Kommunikationsgeräte (Handy oder Pager) bestimmt.

Ausgehend vom Stand der Technik und den bisherigen Nachteilen bekannter Lösungen ist es daher Aufgabe der Erfindung, ein Verfahren bereitzustellen, mit dem die Sicherheit und Zuverlässigkeit bei der Zustellung von Postsendungen bei räumlich variablen Zustellgebieten erhöht wird.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-14.

Das erfindungsgemäße Verfahren zur Übermittlung einer Nachricht an einen von mehreren Nutzern sieht vor, dass eine Nachricht von einer zentralen Nachrichtenverwaltungseinheit an ein elektronisches Gerät eines jeweiligen Nutzers übermittelt wird. Wenigstens ein Nutzer ist dazu wenigstens einer von mehreren Zonen zugeordnet, und in einem Speicher in Verbindung mit der zentralen Nachrichtenverwaltungseinheit sind wenigstens Verbindungsinformationen zur Übermittlung einer Nachricht an das elektronische Gerät des Nutzers und Informationen darüber hinterlegt sind, welcher Zone der Nutzer zugeordnet ist und ob der Nutzer für den Erhalt einer Nachricht registriert ist. Von einem Ortungsmittel wird eine Ortungsmitteilung an die zentrale Nachrichtenverwaltungseinheit gesendet, sobald durch das Ortungsmittel der Zutritt eines weiteren elektronischen Geräts in eine dem Nutzer zugeordneten Zone detektiert wird. Daraufhin erfolgt durch die zentrale Nachrichtenverwaltungseinheit eine Prüfung anhand der im Speicher hinterlegten Informationen, welche Nutzer für die betreffende Zone registriert sind, für welche der Zutritt des weiteren elektronischen Geräts detektiert wurde. Die zentrale Nachrichtenverwaltungseinheit übermittelt anhand der im Speicher hinterlegten Verbindungsinformationen eine Nachricht an das elektronische Gerät des Nutzers, falls die Prüfung der zentralen Nachrichtenverwaltungseinheit ergibt, dass der Nutzer für die betreffende Zone, für welche der Zutritt des weiteren elektronischen Geräts detektiert wurde, und für den Erhalt einer Nachricht registriert ist.

Das elektronische Gerät des Nutzers kann beispielsweise ein Mobiltelefon oder Computer sein, so dass die Nachricht an den Nutzer eine E-Mail und/oder eine SMS ist.

Vorzugsweise ist das weitere elektronische Gerät ein Gerät mit einem GSM-Modul und das Ortungsmittel führt eine GSM-Ortung über eine oder mehrere Funkzellen innerhalb der Zone durch, um den Zutritt des weiteren elektronischen Geräts in die betreffende Zone zu detektieren. In einem anderen Ausführungsbeispiel der Erfindung ist das weitere elektronische Gerät ein GPS-Modul, und das Ortungsmittel führt innerhalb der Zone eine GPS-Ortung über mehrere Satelliten durch, um den Zutritt des weiteren elektronischen Geräts in die betreffende Zone zu detektieren. Das weitere elektronische Gerät kann dabei auch mit einem Fahrzeug verbunden sein. Vorzugsweise ist der Nutzer mehreren Zonen zugeordnet. Dabei kann der Nutzer über das Internet Zugriff auf die in dem Speicher hinterlegten Informationen haben und diese Informationen verändern. Die weitere Person ist ein Postzusteller. Die Größe der Zonen, für die sich der Nutzer registrieren kann, ist veränderlich und an ein Sendevolumen, das der Postzusteller zuzustellen hat, anpassbar.

In einem Ausführungsbeispiel der Erfindung ist vorgesehen, dass die zentrale Nachrichtenverwaltungseinheit bei Übermittlung einer Nachricht an das elektronische Gerät des Nutzers auch eine Nachricht an das weitere elektronische Gerät übermittelt, wobei diese Nachricht Informationen beinhaltet, die dem Nutzer zugeordnet sind und diese Informationen aus dem Speicher der zentralen Nachrichtenverwaltungseinheit abgerufen werden. Die dem Nutzer zugeordneten Informationen beinhalten beispielsweise den Namen und/oder die Adresse des Nutzers.

In einem weiteren Ausführungsbeispiel der Erfindung ist vorgesehen, dass auf dem weiteren elektronischen Gerät eine Anwendung läuft, die wenigstens zur Anzeige und/oder Ausgabe eine Route durch die betreffende Zone ausgebildet ist, wobei die Route aus wenigstens einem Haltepunkt besteht. Die in der Nachricht an das weitere elektronische Gerät enthaltenen Informationen können dann in die Anwendung auf dem elektronischen Gerät geladen und die Route anhand dieser Informationen geändert werden. Dabei kann die Route durch die zentrale Nachrichtenverwaltungseinheit geändert und neue Routendaten von der zentralen Nachrichtenverwaltungseinheit als Nachricht an das weitere elektronische Gerät übermittelt werden, wodurch die durch das elektronische Gerät angezeigte und/oder ausgegebene Route verändert wird. Alternativ kann die durch das weitere elektronische Gerät angezeigte und/oder ausgegebene Route anhand von in der Nachricht an das weitere elektronische Gerät enthaltenen Informationen durch die Anwendung auf dem weiteren elektronischen Gerät verändert werden.

Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Darstellung der an dem erfindungsgemäßen Verfahren beteiligten Komponenten eines Logistiksystems;
- Fig. 2: ein Ausführungsbeispiel von Informationen zu mehreren Nutzern in einem Speicher in Verbindung mit einer zentralen Nachrichtenverwaltungseinheit; und
- Fig. 3: eine schematische Darstellung des Zugriffs eines Nutzers auf ihm zugeordnete Informationen gemäß Fig. 2.

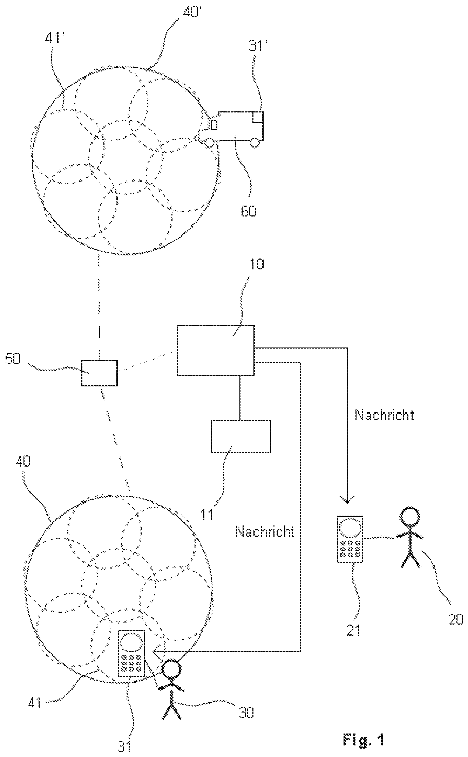

Fig. 1 zeigt eine schematische Darstellung von Komponenten eines Logistiksystems, die an der Durchführung des erfindungsgemäßen Verfahrens beteiligt sein können. Das Logistiksystem umfasst wenigstens zwei räumliche Zonen 40 und 40', denen mehrere Adressen zugeordnet sind. Vorzugsweise handelt es sich bei den Zonen um Zustellrouten von Zustellern, die für eine bestimmte Zone zuständig sind. Die Größe der Zonen ist veränderlich und kann beispielsweise täglich an das Sendevolumen angepasst werden, das der jeweilige Zusteller zuzustellen hat. Hat ein Zusteller an einem Tag übermäßig viele Sendungen auszutragen, können Teile seiner bisherigen Zone von einem anderen Zusteller übernommen werden, wodurch sich dessen Zone für diesen Tag vergrößert. Die räumliche Ausdehnung der Zonen und somit die Zustelladressen, die der jeweiligen Zone zugeordnet sind, sind somit veränderlich. Ferner kann es sich bei den Zonen 40 und 40' auch um Teilbereiche von Zustellrouten handeln.

Das Logistiksystem weist wenigstens ein Ortungsmittel 50 auf, mit dem der Zutritt eines elektronischen Geräts in die betreffende Zone detektiert werden kann. Dazu liegen innerhalb einer Zone 40 beispielsweise mehrere Funkzellen 41 eines Mobilfunknetzes vor, so dass der Zutritt eines Mobilfunktelefons 31 mit einem GSM-Modul auf bekannte Weise detektiert werden kann. Dabei kann nicht nur der Zutritt detektiert werden, sondern auch eine Identifizierung des Geräts erfolgen. Über das identifizierte Gerät kann wiederum der Zusteller/das Zustellfahrzeug identifiziert werden, der/das das Gerät mit sich führt, da dieser/dieses für das Gerät registriert ist. Diese Art der Ortung eines Mobilfunktelefons über Funkzellen eines Mobilfunknetzes ist auch als GSM-Ortung bekannt. Führt der Zusteller 30 einer Zustellroute 40 ein solches Mobilfunktelefon mit sich, wenn er die Zone 40 betritt, kann dieser Zutritt detektiert und an das Ortungsmittel 50 übermittelt werden.

Da die Ausdehnung der Zonen variabel ist, ist auch die Zuordnung von Funkzellen zu der jeweiligen Zone variabel. Ferner kann neben einer GSM-Ortung auch eine Satellitenortung über beispielsweise ein GPS-Modul erfolgen. Eine GPS-Ortung ist gegenüber einer GSM-Ortung genauer, erfordert jedoch stets eine Verbindung zu mehreren Satelliten, was nicht immer gegeben ist. Doch auch jegliche andere Ortungsmethoden, um den Zutritt einer Person mit einem elektronischen Gerät zu einer definierten Zone detektieren zu können, können für das erfindungsgemäße Verfahren eingesetzt werden.

Die zu erfassende Person 30 kann dabei das elektronische Gerät 31 direkt mit sich führen, was beispielsweise bei Mobilfunktelefonen oder Handhelds der Fall ist. Das elektronische Gerät 31 kann jedoch auch in ein Zustellfahrzeug 60 integriert sein, so dass der Zutritt des Fahrzeugs 60 und damit indirekt auch der Zutritt einer Person 30 zu einer Zone detektiert wird.

Sobald der Zutritt des elektronischen Geräts 31 zu einer Zone 40 detektiert und an das Ortungsmittel 50 übermittelt wurde, sendet das Ortungsmittel 50 eine entsprechende Information an eine zentrale Nachrichtenverwaltungseinheit 10. Das Ortungsmittel 50 muss dabei nicht getrennt von der Nachrichtenverwaltungseinheit 10 ausgebildet sein, sondern kann auch Teil der Nachrichtenverwaltungseinheit 10 sein. Die Nachrichtenverwaltungseinheit 10 erhält somit Informationen über den Zutritt von elektronischen Geräten zu mehreren Zonen 40 (40'). Da es ist sich in einem Land um eine Vielzahl von Zustellbezirken, Zustellrouten und Zustellern handelt, müssen entsprechend viele Zonen anhand von dafür registrierten elektronischen Geräten überwacht werden.

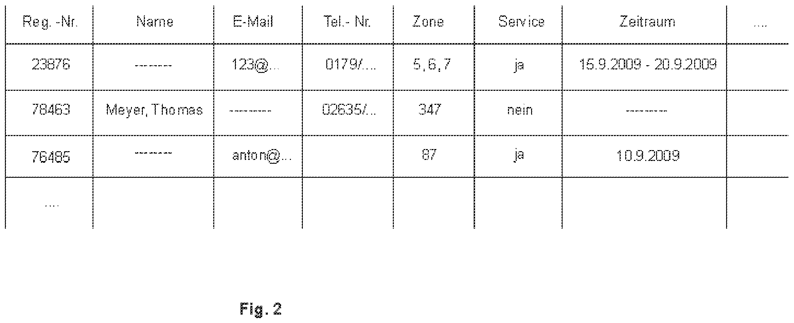

Nach Erhalt der Information über den Zutritt eines elektronischen Geräts in eine Zone, ermittelt die zentrale Nachrichtenverwaltungseinheit 10, ob für diese Zone Nutzer von diesem Zutritt durch eine Nachricht informiert werden möchten. Diese Prüfung erfolgt durch Abfrage von Informationen, die in einem Speicher 11 wie beispielsweise einer Datenbank hinterlegt sind. Diese Informationen sind in Fig. 2 in tabellarischer Form dargestellt, wobei diese Darstellung nicht einschränkend zu verstehen ist. Die Informationen müssen insbesondere nicht in tabellarischer Form hinterlegt sein, sondern können auf jegliche Art und Weise verschiedenen registrierten Nutzern zugeordnet sein.

Ein Nutzer, der über den Zutritt eines Zustellers in eine bestimmte Zone durch eine Nachricht informiert werden möchte, muss sich bei der Nachrichtenverwaltungseinheit 10 für diesen Dienst registrieren lassen. Der Dienst kann dabei als kostenloser oder kostenpflichtiger Service angeboten werden. Bei Registrierung muss ein Nutzer 20 wenigstens Verbindungsinformationen angeben, welche die Übermittlung einer Nachricht an ein elektronisches Gerät 21 des Nutzers 20 ermöglichen. Hierbei handelt es sich beispielsweise um die Telefonnummer eines Festnetzanschlusses, eine Mobilfunknummer und/oder eine E-Mail-Adresse. Die zu versenden Nachricht kann daher als Sprachnachricht an ein Festnetztelefon, als Kurzmitteilung (SMS- Short Message Service) an ein Mobilfunktelefon und/oder als E-Mail an einen Computer versendet werden.

Der Nutzer 20 muss seine Identität nicht zwingend bekannt geben. Insbesondere wenn es sich um einen kostenlosen Dienst handelt, zu dem keine Abrechnung von Dienstleistungen erfolgt, muss der zentralen Nachrichtenverwaltungseinheit 10 kein Name des Nutzers 20 vorliegen. Auch die Postadresse des Nutzers 20 muss der Nachrichtenverwaltungseinheit 10 nicht bekannt sein. Lediglich wenn die Zuordnung des Nutzers 20 zu einer Zone über die Angabe einer Postadresse erfolgt, muss der Nutzer seine Postadresse angeben, damit die Nachrichtenverwaltungseinheit 10 die Zuordnung vornehmen kann. Es kann jedoch auch vorgesehen sein, dass dem Nutzer die verschiedenen Zonen angegeben werden, der Nutzer 20 sich selbst einer Zone zuordnet und der Nachrichtenverwaltungseinheit 10 lediglich die Zone bekannt gibt. Dem Nutzer kann über eine Internetanwendung beispielsweise eine Karte mit mehreren Zonen angezeigt werden, aus denen der Nutzer Zonen wählen kann. Dies erfolgt vorzugsweise über eine Nummerierung der Zonen. Dabei ist es auch möglich, dass sich ein Nutzer mehreren Zonen zuordnet, falls er beispielsweise sowohl für seine Privatadresse als auch für die Adresse seines Arbeitsplatzes über den Zutritt eines Zustellers informiert werden möchte. Die Wahl der Zonen durch einen Nutzer kann somit ebenfalls variabel sein, wobei auch vorgesehen sein kann, dass sich ein Nutzer für eine Zone registriert, in der er keine feste Adresse hat, in der er aber die Abholung einer Sendung wünscht bzw. über den Zutritt eines Zustellers informiert werden möchte. Die Zuordnung eines Nutzers zu einer Zone ist somit unabhängig von dem Wohn- oder Geschäftsort eines Nutzers.

Gibt der Nutzer 20 keinen Namen an, wird ihm vorzugsweise eine Registrierungsnummer zugeordnet, unter der er im Speicher 11 geführt wird. Auch bei Angabe eines Namens hat es sich jedoch als vorteilhaft erwiesen, jedem Nutzer 20 eine Registrierungsnummer zuzuordnen. Dieser Registrierungsnummer wird wenigstens die Verbindungsinformation in Form wenigstens einer Telefonnummer und/oder einer E-Mail-Adresse und wenigstens eine Zone zugeordnet. Ferner wird zu der Registrierungsnummer hinterlegt, ob bzw. wann der Nutzer die Übermittlung einer Nachricht wünscht. Beispielsweise ist es üblicherweise für Privatpersonen nicht wünschenswert, jeden Tag über den Zutritt eines Zustellers zu einer Zone informiert zu werden, die der Privatadresse des Nutzers zugeordnet ist, da üblicherweise nicht jeden Tag Sendungen zur Abholung vorgesehen sind. Für Geschäftsleute kann dies jedoch der Fall sein, so dass jeder Personenkreis unterschiedliche Zeiträume angeben kann, in denen er eine entsprechende Nachricht erhalten möchte.

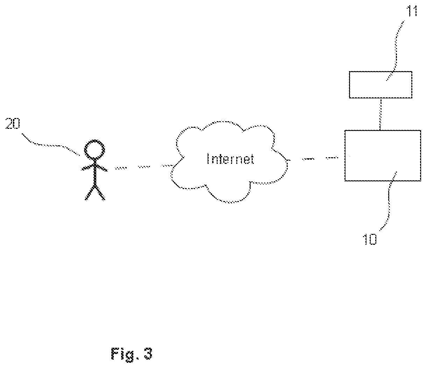

Die Angaben eines Nutzers, ob und wann er eine Nachricht erhalten möchte, können vorzugsweise kurzfristig vom Nutzer geändert werden. Beispielsweise erhält der Nutzer 20 über das Internet Zugriff auf seine Informationen und kann diese bearbeiten, wie es schematisch in Fig. 3 dargestellt ist. Wünscht der Nutzer 20 für den nächsten Tag die Abholung einer Sendung, trägt er dies über eine Internetanwendung ein und ist somit für den nächsten Tag für den Dienst registriert. Erhält die Nachrichtenverwaltungseinheit 10 von dem Ortungsmittel 50 die Information, dass ein elektronisches Gerät 31 eines Zustellers einer betreffenden Zone diese Zone 40 betreten hat, überprüft die Nachrichtenverwaltungseinheit 10 zuerst, welche Nutzer für diesen Tag für diese Zone 40 registriert sind. Für jeden der als registriert ermittelten Nutzer wird anhand der Verbindungsinformationen eine Nachricht an ein elektronisches Gerät des jeweiligen Nutzers übermittelt. Ein erster Nutzer erhält beispielsweise eine SMS auf sein Mobiltelefon mit der Nachricht, dass die Zustellroute eines Zustellers bald am Haus des Nutzers vorbeiführen wird. Ein anderer Nutzer erhält eine entsprechende Nachricht per E-Mail, oder beide Nachrichtenarten können auch kombiniert werden, falls ein Nutzer dies gewählt hat. Andere Nutzer, die zwar bei der Nachrichtenverwaltungseinheit 10 als Nutzer registriert sind, deren Profil aber für diesen bestimmten Tag keine Nachrichtenübermittlung vorsieht, erhalten dagegen keine Nachrichten.

Nach Erhalt einer Nachricht kann ein Nutzer 20 eine Sendung zur Abholung in seinem Briefkasten deponieren und durch Umklappen einer roten Fahne signalisieren, dass eine Sendung zur Abholung bereit liegt. Da dies zeitnah erfolgen kann, besteht ein geringeres Risiko, dass unbefugte Dritte die Sendung vor Ankunft des Zustellers entwenden. In einem anderen Ausführungsbeispiel der Erfindung wartet der Nutzer, bis der Zusteller zu seinem Haus kommt und übergibt die Sendung persönlich.

Die Nachricht über den Zutritt eines Zustellers zu einer Zone kann jedoch auch dazu genutzt werden, um Sendungen wie Einschreiben oder Nachnahmesendungen persönlich im Empfang nehmen zu können, da der Zeitpunkt der Ankunft eines Zustellers mit dem erfindungsgemäßen Verfahren genauer bestimmt werden kann. Ein Nutzer des Dienstes muss somit beispielsweise nicht den ganzen Vormittag an einer Adresse anwesend sein, sondern muss sich erst zu der Adresse begeben, wenn ein Zusteller naht. Alternativ kann der Empfänger auch einen frei wählbaren Treffpunkt vorgeben, an dem er sich mit dem Zusteller treffen möchte. Da ein Zusteller nach Zutritt zu seiner Zustellroute eine bestimmte Zeit benötigt, bis er beispielsweise an der letzten Straße des Bezirks angekommen ist, kann eine Zustellroute für das erfindungsgemäße Verfahren auch in kleinere Teilbezirke (Zonen) unterteilt werden. So kann antizipiert werden, dass ein Zusteller beispielsweise etwa noch 15 Minuten benötigen wird, bis er an einer Adresse angekommen ist.

Falls ein Zusteller in einer Straße oder einem Straßenzug keine Sendungen abzugeben hat, könnte es jedoch vorkommen, dass er Signale für abzuholende Sendungen nicht wahrnimmt und/oder ein Nutzer einen Zusteller beispielsweise nicht am Fenster sichten könnte. Falls ein Zusteller eine Straße nicht betritt, kann er auch rote Signalfahnen an Briefkästen nicht wahrnehmen, sondern würde seine Zustelltour fortsetzen, ohne an bestimmten Adressen vorbei zu kommen. Um auch den Zusteller zu informieren, dass er eine Sendung abzuholen hat, sieht das erfindungsgemäße Verfahren daher in einem Ausführungsbeispiel vor, dass dem Zusteller parallel zu der Nachricht an den Nutzer 20 ebenfalls eine Nachricht übermittelt wird. Diese Nachricht kann von der Nachrichtenverwaltungseinheit 10 ebenfalls per SMS oder E-Mail an das elektronische Gerät 31 übermittelt werden, das der Zusteller 30 mit sich führt. Jegliche anderen Nachrichtenübermittlungen sind ebenfalls möglich. Auch kann die Nachricht direkt an ein elektronisches Gerät 31 übermittelt werden, das in ein Zustellfahrzeug 60 integriert ist.

Die Nachricht an das elektronische Gerät 31 und damit an den Zusteller 30 beinhaltet wenigstens die Information, dass innerhalb der betreffenden Zone die Abholung einer Sendung ansteht. Vorzugsweise wird dies ergänzt durch die Adresse und/oder den Namen des Nutzers 20, welcher sich für die Abholung registriert hat. Hat der Nutzer 20 ferner angegeben, welche Art von Sendung angeholt werden muss, kann der Zusteller sich beispielsweise auf die Abholung eines Briefes und/oder eines Pakets einstellen.

In einem Ausführungsbeispiel der Erfindung umfasst das elektronische Gerät 31 eines Zustellers 30 eine Anwendung, welche dem Zusteller eine bevorzugte Route durch seinen Zustellbezirk anzeigt. Diese Route wird vor Beginn seiner Tour anhand einer Auswertung der Adressen der auszuliefernden Sendungen ermittelt und auf einem Display des elektronischen Geräts 31 angezeigt und/oder akustisch ausgegeben. Die Route umfasst mehrere Haltepunkte, an denen der Zusteller Sendungen auszuliefern hat. Kommt nun zu seiner Auslieferungsroute eine Abholung an einer Adresse hinzu, die bisher kein Haltepunkt der Route ist, muss ein neuer Haltepunkt ergänzt werden, was die Route gegebenenfalls grundsätzlich verändert. Diese neue Route kann von der Nachrichtenverwaltungseinheit 10 ermittelt und entsprechende Routeninformationen in die Nachricht an den Zusteller 30 integriert werden. Das elektronische Gerät 31 liest die erforderlichen Informationen aus der Nachricht aus und die Route wird entsprechend geändert. Alternativ kann die Nachrichtenverwaltungseinheit 10 in der Nachricht an den Zusteller nur den neuen Haltepunkt angeben, woraufhin das elektronische Gerät 31 mit dem neuen Haltepunkt selbst eine neue Route berechnet und auf einem Display anzeigt bzw. akustisch ausgibt.

In einem weiteren Ausführungsbeispiel der Erfindung liegen der Nachrichtenverwaltungseinheit 10 Informationen über die Kapazitäten beispielsweise aller Zustellfahrzeuge vor, so dass die Nachrichtenverwaltungseinheit 10 ermitteln kann, ob ein betreffender Zusteller 30 die Möglichkeit hat, Sendungen wie größere Pakete abholen zu können. Ist dies nicht der Fall, wird vorzugsweise ein anderer Zusteller in die betreffende Zone geschickt, um die Sendung bei einem Nutzer abzuholen, obwohl ursprünglich der Zutritt des zuständigen Zustellers detektiert und dadurch eine Nachricht an einen Nutzer des Dienstes veranlasst wurde.

### Bezugszeichenliste:

- 10: Zentrale Nachrichtenverwaltungseinheit
- 11: Speicher, Datenbank
- 20: Nutzer, Kunde, Versender
- 21: Elektronisches Gerät eines Nutzers, Mobiltelefon, Computer
- 30: Person, Zusteller
- 31,31': Elektronisches Gerät, Handheld, Mobiltelefon
- 40,40': Zone, Zustellbezirk, Zustellroute
- 41,41': Funkzelle
- 50: Ortungsmittel
- 60: Zustellfahrzeug

## Patentansprüche

1. Verfahren zur Übermittlung einer Nachricht an einen von mehreren Nutzern, wobei die Nachricht von einer zentralen Nachrichtenverwaltungseinheit (10) an ein elektronisches Gerät (21) eines jeweiligen Nutzers (20) übermittelt wird,
wobei der Nutzer (20) wenigstens einer von mehreren Zonen (40;40') zugeordnet ist und in einem Speicher (11) in Verbindung mit der zentralen Nachrichtenverwaltungseinheit (10) wenigstens Verbindungsinformationen zur Übermittlung einer Nachricht an das elektronische Gerät (21) des Nutzers und Informationen darüber hinterlegt sind, welcher Zone (40; 40') der Nutzer (20) zugeordnet ist und ob der Nutzer (20) für den Erhalt einer Nachricht registriert ist; und
von einem Ortungsmittel (50) eine Ortungsmitteilung an die zentrale Nachrichtenverwaltungseinheit (10) gesendet wird, sobald durch das Ortungsmittel (50) der Zutritt eines weiteren elektronischen Geräts (31) eines Postzustellers (30) in eine Zone (40;40') detektiert wird, und
durch die zentrale Nachrichtenverwaltungseinheit (10) eine Prüfung anhand der im Speicher (11) hinterlegten Informationen erfolgt, welche Nutzer für die betreffende Zone (40;40') registriert sind, für welche der Zutritt des weiteren elektronischen Geräts (31) detektiert wurde, und
die zentrale Nachrichtenverwaltungseinheit (10) anhand der im Speicher (11) hinterlegten Verbindungsinformationen eine Nachricht an das elektronische Gerät (21) des Nutzers (20) übermittelt, falls die Prüfung der zentralen Nachrichtenverwaltungseinheit (10) ergibt, dass der Nutzer (20) für die betreffende Zone (40;40'), für welche der Zutritt des weiteren elektronischen Geräts (31) detektiert wurde, und für den Erhalt einer Nachricht registriert ist, und die Größe der Zonen (40; 40') veränderlich ist und an ein Sendevolumen, das der Postzusteller (30) zuzustellen hat, anpassbar ist.

2. Verfahren nach Anspruch 1,
**dadurch gekennzeichnet,**
**dass** die Zuordnung des Nutzers (20) zu einer Zone (40; 40') über die Angabe einer Postadresse durch den Nutzer (20) oder durch Auswahl einer oder mehrerer Zonen (40; 40') durch den Nutzer erfolgt.

3. Verfahren nach Anspruch 1 und 2,
**dadurch gekennzeichnet,**
**dass** das elektronische Gerät (21) des Nutzers (20) ein Mobiltelefon oder Computer ist.

4. Verfahren nach einem der Ansprüche 1 bis 3,
**dadurch gekennzeichnet,**
**dass** die Nachricht an den Nutzer (20) eine E-Mail und/oder eine SMS ist.

5. Verfahren nach einem der Ansprüche 1 bis 4,
**dadurch gekennzeichnet,**
**dass** das weitere elektronische Gerät (31) ein Gerät mit einem GSM-Modul ist und das Ortungsmittel (50) eine GSM-Ortung über eine oder mehrere Funkzellen (41) innerhalb der Zone (40;40') durchführt, um den Zutritt des weiteren elektronischen Geräts (31) in die betreffende Zone (40;40') zu detektieren.

6. Verfahren nach einem der Ansprüche 1 bis 5,
**dadurch gekennzeichnet,**
**dass** das weitere elektronische Gerät (31) ein GPS-Modul ist und das Ortungsmittel (50) innerhalb der Zone (40;40') eine GPS-Ortung über mehrere Satelliten durchführt, um den Zutritt des weiteren elektronischen Geräts (31) in die betreffende Zone (40;40') zu detektieren.

7. Verfahren nach einem der Ansprüche 1 bis 6,
**dadurch gekennzeichnet,**
**dass** das weitere elektronische Gerät (31) mit einem Fahrzeug (60) verbunden ist.

8. Verfahren nach einem der Ansprüche 1 bis 7,
**dadurch gekennzeichnet,**
**dass** der Nutzer (20) mehreren Zonen (40;40') zugeordnet ist.

9. Verfahren nach einem der Ansprüche 1 bis 8,
**dadurch gekennzeichnet,**
**dass** die zentrale Nachrichtenverwaltungseinheit (10) bei Übermittlung einer Nachricht an das elektronische Gerät (21) des Nutzers (20) eine Nachricht an das weitere elektronische Gerät (31) übermittelt, wobei diese Nachricht Informationen beinhaltet, die dem Nutzer (20) zugeordnet sind und diese Informationen aus dem Speicher (11) der zentralen Nachrichtenverwaltungseinheit (10) abgerufen werden, vorzugsweise beinhalten die dem Nutzer (20) zugeordneten Informationen den Namen und/oder die Adresse des Nutzers (20).

10. Verfahren nach Anspruch 9,
**dadurch gekennzeichnet,**
**dass** die Nachricht an das weitere Gerät (31) wenigstens die Information beinhaltet, dass innerhalb der Zone (40; 40') die Abholung einer Sendung des Nutzers (20) ansteht.

11. Verfahren nach Anspruch 10,
**dadurch gekennzeichnet,**
**dass** die Nachrichtenverwaltungseinheit (10) aus den vorliegenden Informationen über Kapazitäten aller Zustellfahrzeuge (60) ermittelt, ob ein betreffender Zusteller (30) die Möglichkeit hat, Sendungen abzuholen und bei nicht vorhandener Kapazität des Zustellers (30) einen anderen Zusteller (30) in die betreffende Zone (40; 40') schickt, um die Sendung beim Nutzer (20) abzuholen.

12. Verfahren nach einem der Ansprüche 1 bis 11,
**dadurch gekennzeichnet,**
**dass** auf dem weiteren elektronischen Gerät (31) eine Anwendung läuft, die wenigstens zur Anzeige und/oder Ausgabe eine Route durch die betreffende Zone (40;40') ausgebildet ist, wobei die Route aus wenigstens einem Haltepunkt besteht.

13. Verfahren nach einem der Ansprüche 9 bis 11,
**dadurch gekennzeichnet,**
**dass** die in der Nachricht an das weitere elektronische Gerät (31) enthaltenen Informationen in die Anwendung auf dem elektronischen Gerät (31) geladen und die Route anhand dieser Informationen geändert wird, vorzugsweise werden die Route durch die zentrale Nachrichtenverwaltungseinheit (10) geändert und neue Routendaten von der zentralen Nachrichtenverwaltungseinheit (10) als Nachricht an das weitere elektronische Gerät (31) übermittelt, wodurch die durch das elektronische Gerät angezeigte und/oder ausgegebene Route verändert wird oder vorzugsweise wird die durch das weitere elektronische Gerät (31) angezeigte und/oder ausgegebene Route anhand von in der Nachricht an das weitere elektronische Gerät (31) enthaltenen Informationen durch die Anwendung auf dem weiteren elektronischen Gerät (31) verändert.

14. Verfahren nach einem der Ansprüche 1 bis 13,
**dadurch gekennzeichnet,**
**dass** der Nutzer (20) über das Internet Zugriff auf die in dem Speicher (11) hinterlegten Informationen hat und diese Informationen verändert.

## Claims

1. Method for transmitting a message to one of a plurality of users, wherein the message is transmitted from a central message management unit (10) to an electronic device (21) of a respective user (20),
wherein the user (20) is allocated to at least one of a plurality of zones (40; 40'), and at least connection information for transmitting a message to the electronic device (21) of the user and information about which zone (40; 40') the user (20) is allocated to and whether the user (20) is registered to receive a message are stored in a memory (11) in connection with the central message management unit (10); and
wherein a positioning means (50) sends a localization message to the central message management unit (10) as soon as the positioning means (50) detects the access of a further electronic device (31) of a postman (30) into a zone (40; 40'), and the central message management unit (10) determines on the basis of the information stored in the memory (11) which users are registered for the respective zone (40; 40') for which the access of the further electronic device (31) has been detected, and
wherein, based on the connection information stored in the memory (11), the central message management unit (10) transmits a message to the electronic device (21) of the user (20) if the determination by the central message management unit (10) has the result that the user (20) is registered for the respective zone in question (40; 40') for which the access of the further electronic device (31) has been detected and for the receipt of a message, and
wherein the size of the zones (40; 40') is variable and can be adapted to a delivery volume to be delivered by the postman (30).

2. Method of claim 1, **characterized in that** the allocation of the user (20) to a zone (40; 40') is performed by the indication of a postal address by the user (20) or by the selection of one or a plurality of zones (40; 40') by the user.

3. Method of claims 1 and 2, **characterized in that** the electronic device (21) of the user (20) is a mobile phone or computer.

4. Method of one of claims 1 to 3, **characterized in that** the message to the user (20) is an e-mail and/or an SMS.

5. Method of one of claims 1 to 4, **characterized in that** the further electronic device (31) is a device comprising a GSM module and the positioning means (50) performs a GSM localization via one or a plurality of radio cells (41) within the zone (40; 40') in order to detect the access of the further electronic device (31) into the respective zone (40; 40').

6. Method of one of claims 1 to 5, **characterized in that** the further electronic device (31) is a GPS module and the positioning means (50) performs a GPS localization within the zone (40; 40') via several satellites to detect the access of the further electronic device (31) into the respective zone (40; 40').

7. Method of one of claims 1 to 6, **characterized in that** the further electronic device (31) is connected to a vehicle (60).

8. Method of one of claims 1 to 7, **characterized in that** the user (20) is allocated to a plurality of zones (40; 40').

9. Method of one of claims 1 to 8, **characterized in that** upon transmission of a message to the electronic device (21) of the user (20), the central message management unit (10) transmits a message to the further electronic device (31), which message contains information that is allocated to the user (20) and which information is retrieved from the memory (11) of the central message management unit (10), the information allocated to user (20) preferably including the name and/or the address of the user (20).

10. Method of claim 9, **characterized in that** the message to the further device (31) at least contains the message that a postal item of the user (20) is to be fetched within the zone (40; 40').

11. Method of claim 10, **characterized in that** the central message management unit (10) determines from the available information about capacities of all delivery vehicles (60), whether a respective postman (30) has the possibility to fetch postal items, and if the postman (30) has no available capacities, sends another postman (30) into the respective zone (40; 40') to fetch the postal item at the user (20).

12. Method of one of claims 1 to 11, **characterized in that** an application is executed on the further electronic device (31) which is configured at least for displaying and/or outputting a route through the respective zone (40; 40'), the route consisting of at least one stop.

13. Method of claims 9 to 11, **characterized in that** the information contained in the message to the further electronic device (31) is loaded into the application on the electronic device (31) and the route is changed based on this information, preferably the route is changed by the central message management unit (10) and new route data are transmitted by the central message management unit (10) to the further electronic device (31) as a message, whereby the route displayed and/or outputted by the electronic device is changed or, preferably, the route displayed and/or outputted by the further electronic device (31) is changed by the application on the further electronic device (31) based on the information contained in the message to the further electronic device (31).

14. Method of one of claims 1 to 13, **characterized in that** the user (20) has access to the information stored in the memory (11) via the Internet and changes this information.

## Revendications

1. Procédé de transmission d'un message à l'un de plusieurs utilisateurs, dans lequel le message est transmis par une unité centrale de gestion de messages (10) à un appareil électronique (21) d'un utilisateur respectif (20),
dans lequel l'utilisateur (20) est associé à au moins l'une d'une pluralité de zones (40; 40') et dans une mémoire (11) sont mémorisées, en communication avec l'unité centrale de gestion de messages (10), au moins les informations de connexion pour transmettre un message à l'appareil électronique (21) de l'utilisateur et les informations sur la zone (40; 40'), zone qui est associée à l'utilisateur (20), et si l'utilisateur (20) est enregistré pour la réception d'un message; et
par un moyen de localisation (50) est envoyé une communication de localisation à l'unité centrale de gestion de messages (10) dès qu'est détecté, par le moyen de localisation (50), l'accès d'un autre appareil électronique (31) d'une entreprise postale (30) dans une zone (40; 40'), et
par l'unité centrale de gestion de messages (10) a lieu une vérification, à l'aide des informations mémorisées dans la mémoire (11), des utilisateurs qui sont enregistrés pour la zone (40; 40') concernée pour laquelle a été détecté l'accès de l'autre appareil électronique (31), et
l'unité centrale de gestion des messages (10) transmet, à l'aide des informations de connexion mémorisées dans la mémoire (11), un message à l'appareil électronique (21) de l'utilisateur (20) si la vérification de l'unité centrale de gestion des messages (10) a pour résultat que l'utilisateur (20) est enregistré pour la zone (40; 40') concernée pour laquelle a été détecté l'accès de l'autre appareil électronique (31) et pour la réception d'un message, et la grandeur des zones (40; 40') est variable et peut être adaptée à un volume d'envoi que l'entreprise postale (30) doit envoyer.

2. Procédé selon la revendication 1,
**caractérisé par le fait**
**que** l'association de l'utilisateur (20) à une zone (40; 40') a lieu par l'indication d'une adresse postale par l'utilisateur (20) ou par la sélection d'une ou plusieurs zones (40; 40') par l'utilisateur.

3. Procédé selon les revendications 1 et 2,
**caractérisé par le fait**
**que** l'appareil électronique (21) de l'utilisateur (20) est un téléphone mobile ou un ordinateur.

4. Procédé selon l'une des revendications 1 à 3,
**caractérisé par le fait**
**que** le message à l'utilisateur (20) est un courriel et/ou un SMS.

5. Procédé selon l'une des revendications 1 à 4,
**caractérisé par le fait**
**que** l'autre appareil électronique (31) est un appareil avec un module GSM et que le moyen de localisation (50) effectue une localisation GSM par l'intermédiaire d'une ou plusieurs cellules radio (41) dans la zone (40; 40') pour détecter l'accès de l'autre appareil électronique (31) dans la zone (40; 40') concernée.

6. Procédé selon l'une des revendications 1 à 5,
**caractérisé par le fait**
**que** l'autre appareil électronique (31) est un module GPS et que le moyen de localisation (50) effectue, dans la zone (40; 40'), une localisation GPS par l'intermédiaire d'une pluralité de satellites pour détecter l'accès de l'autre appareil électronique (31) dans la zone (40; 40') concernée.

7. Procédé selon l'une des revendications 1 à 6,
**caractérisé par le fait**
**que** l'autre appareil électronique (31) est connecté à un véhicule (60).

8. Procédé selon l'une des revendications 1 à 7,
**caractérisé par le fait**
**que** l'utilisateur (20) est associé à plusieurs zones (40; 40').

9. Procédé selon l'une des revendications 1 à 8,
**caractérisé par le fait**
**que** l'unité centrale de gestion de messages (10) transmet, lors de la transmission d'un message à l'appareil électronique (21) de l'utilisateur (20), un message à l'autre appareil électronique (31), où ce message contient des informations qui sont associées à l'utilisateur (20) et ces informations sont récupérées de la mémoire (11) de l'unité centrale de gestion des messages (10), les informations associées à l'utilisateur (20) contiennent de préférence le nom et/ou l'adresse de l'utilisateur (20).

10. Procédé selon la revendication 9,
**caractérisé par le fait**
**que** le message envoyé à l'autre appareil (31) contient au moins les informations sur le fait que dans la zone (40; 40') est sur le point de se produire la collecte d'un envoi de l'utilisateur (20).

11. Procédé selon la revendication 10,
**caractérisé par le fait**
**que** l'unité de gestion des messages (10) détermine, à partir des informations disponibles sur les capacités de tous les véhicules de livraison (60), si un livreur concerné (30) a la possibilité de collecter des envois et envoie, en cas de capacité non disponible du livreur (30), un autre livreur (30) à la zone concernée (40; 40') pour collecter l'envoi auprès de l'utilisateur (20).

12. Procédé selon l'une des revendications 1 à 11,
**caractérisé par le fait**
**que** sur l'autre appareil électronique (31) est en cours d'exécution une application qui est au moins conçue pour afficher et/ou sortir un itinéraire à travers la zone (40; 40') concernée, où l'itinéraire consiste en au moins un point d'arrêt.

13. Procédé selon l'une des revendications 9 à 11,
**caractérisé par le fait**
**que** les informations contenues dans le message envoyé à l'autre appareil électronique (31) sont chargées dans l'application sur l'appareil électronique (31) et l'itinéraire est modifié à l'aide de ces informations, de préférence, l'itinéraire est modifié par l'unité centrale de gestion des messages (10) et de nouvelles données d'itinéraire sont transmises par l'unité centrale de gestion des messages (10) comme message à l'autre appareil électronique (31), d'où l'itinéraire affiché et/ou sorti par l'appareil électronique est modifié ou, de préférence, l'itinéraire affiché et/ou sorti par l'autre appareil électronique (31) est modifié à l'aide des informations contenues dans le message envoyé à l'autre appareil électronique (31) par l'application sur l'autre appareil électronique (31).

14. Procédé selon l'une des revendications 1 à 13,
**caractérisé par le fait**
**que** l'utilisateur (20) a accès, via Internet, aux informations mémorisées dans la mémoire (11) et modifie ces informations.
